# EUROPÄISCHE PATENTSCHRIFT

(11) **EP 1 988 039 B1**
(45) Veröffentlichungstag und Bekanntmachung des Hinweises auf die Patenterteilung: **17.06.2009**
(21) Anmeldenummer: 07008415.7
(22) Anmeldetag: 25.04.2007
(51) Int. Cl.: B65G 47/14, B65B 35/14, B65B 35/34

(54) **Vibrationszuführung**
Vibrating feeder
Alimentateur à canal vibrant

(43) Veröffentlichungstag der Anmeldung: 05.11.2008
(73) Patentinhaber: UHLMANN PAC-SYSTEME GmbH & Co. KG, 88471 Laupheim (DE)
(72) Erfinder: Bentele, Josef, 88471 Laupheim (DE); Pfau, Georg, 88471 Laupheim (DE)
(74) Vertreter: Wächter, Jochen

(56) Entgegenhaltungen:
- CH-A- 373 689
- DE-A1- 2 037 791
- US-A- 4 733 520

## Beschreibung

Die Erfindung betrifft eine Vibrationszuführung für die Zuführung von Produkten wie Tabletten, Kapseln oder dergl., mit einem Produktzulauf für die Übergabe der Produkte auf einen die Produkte zu einem Auslauf fördernden, in Umfangsrichtung schwingenden Rundvibrationsteller.

Derartige Vibrationszuführungen mit einem Rundvibrationsteller werden insbesondere in der pharmazeutischen Industrie bei der Verpackung pharmazeutischer Produkte eingesetzt, die dazu aus einem Vorratsbehälter in die Näpfe von Blisterpackungen transferiert werden müssen. Der Rundvibrationsteller dient dabei als Koppelglied zwischen dem Vorratsbehälter, in dem die Produkte ungeordnet vorliegen, und dem Übergabemittel an die Blisterpackungen, wobei die Produkte von dem Produktzulauf zu dem Auslauf durch eine Schwingbewegung des Rundvibrationstellers in Umfangsrichtung gefördert werden. Problematisch ist dabei, dass die auf als Kreisbögen geformten Sortierbahnen des Rundvibrationstellers laufenden Produkte je nach radialer Lage unterschiedliche Schwingweiten erfahren und so die Förderleistung des Rundvibrationstellers mit dem Radius variiert. Im Ergebnis ist die Förderleistung auf den Innenbahnen um bis zu 30% reduziert.

Die US-4733520-A offenbart eine Zufuhrvorrichtung mit einem zylindrischen Vibrationsbehälter für die Zufuhr von Produkten über eine Vorrichtung mit mehreren Kanälen an Maschinen zur Blisterpackung nach dem Oberbegriff des unabhängigen Anspruches 1.

Der Erfindung liegt die Aufgabe zugrunde, eine Vibrationszuführung der eingangs genannten Art so auszubilden, dass deren Leistungsfähigkeit gesteigert werden kann.

Diese Aufgabe wird bei einer Vibrationszuführung der eingangs genannten Art dadurch gelöst, dass dem Linearsortierer ein Antrieb für eine Längsvibration in Richtung einer Sehne des Rundvibrationstellers zugeordnet ist, um so eine aktive Förderung der Produkte auch auf dem Linearsortierer zu erzielen und zu vermeiden, dass die Produkte auf dem Linearsortierer nur von nachfolgenden Produkten vorgeschoben werden müssen.

Mit dieser Gestaltung ist der Vorteil verbunden, dass der Rundvibrationsteller nur noch als Vorsortierer genutzt und in dem Linearsortierer ein gleichmäßiger Vorschub der Produkte unabhängig von deren radialer Position erzeugt wird.

Im Rahmen der Erfindung ist weiterhin vorgesehen, dass der Linearsortierer in einer radialen Aufnahme des Rundvibrationstellers angeordnet ist, um so das Höhenniveau für die Förderung der Produkte konstant zu halten.

Zur Erzeugung der Längsvibration hat es sich als günstig erwiesen, wenn der Antrieb als ein Piezoantrieb oder ein Magnet-Antrieb ausgeführt ist, da dieser die erforderlichen Schwingweiten für die Umlenkung reduziert.

Um einen störungsfreien Einlauf der Produkte in den Linearsortierer zu erzielen, ist der Linearsortierer an seinem radial innen liegenden Rand an die Krümmung der Nabe des Rundvibrationstellers angepasst.

Die gleichmäßige Förderung bei Gewährleistung der Ordnung der Produkte wird verbessert, wenn auf dem Linearsortierer parallel zur Förderrichtung verlaufende Bahnen für die Produkte ausgebildet sind.

Wiederum zum besseren Einlauf der Produkte in den Linearsortierer ist der Nabe stromauf des Linearsortierers ein Leitwulst zugeordnet, der die richtige Positionierung der Produkte vor den Bahnen bewirkt.

Alternativ besteht auch die Möglichkeit, dass der Einlauf zumindest der radial innen liegenden Bahn radial nach innen gekrümmt ist, um so deren besonders starke Krümmung zu kompensieren und den Einlauf der zugeordneten Produkte zu erleichtern.

Eine gute Sortierleistung durch den Rundvibrationsteller wird erreicht, indem der Auslauf in Umfangsrichtung des Rundvibrationstellers mindestens 180°, vorzugsweise 270° von dem Produktzulauf beabstandet ist.

Eine ganz besonders bevorzugte Ausführungsform der Erfindung ist dadurch gekennzeichnet, dass der Linearsortierer in Förderrichtung geneigt ist. Durch diese Gestaltung wird eine weitere Steigerung der Leistungsfähigkeit erreicht, wobei auch die Schwingweite des Linearsortierers reduziert werden bei einer gegebenen Förderleistung.

Als günstig hat es sich gezeigt, wenn der Neigungswinkel zwischen 2° und 20°, vorzugsweise zwischen 5° und 10° beträgt.

Zur Vermeidung von Störungen bei der Abgabe der Produkte aus dem Auslauf ist dem Auslauf eine angetriebene Umlenkwalze zugeordnet ist für die Übergabe der Produkte in eine Zuführrinne.

Im folgenden wird die Erfindung an in der Zeichnung dargestellten Ausführungsformen näher erläutert; es zeigen:
- Fig. 1: eine schematische Seitenansicht einer erfindungsgemässen Vorrichtung, teilweise geschnitten dargestellt,
- Fig. 2: eine Draufsicht auf den Rundvibrationsteller einer ersten Ausführungsform,
- Fig. 3: eine Draufsicht auf den Rundvibrationsteller einer zweiten Ausführungsform, und
- Fig. 4: in einer schematischen Seitenansicht das Detail des Auslaufs mit einer Umlenkwalze, teilweise geschnitten dargestellt.

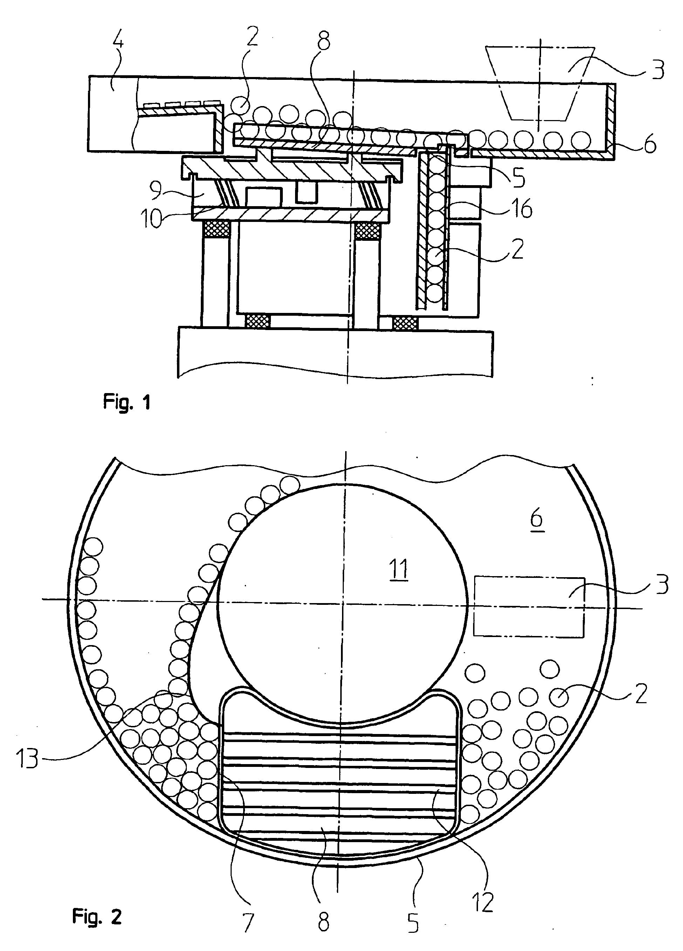

In der Zeichnung ist in Figur 1 schematisch eine Vibrationszuführung 1 für die Zuführung von Produkten 2 wie z.B. pharmazeutischen Produkten in Form von Tabletten, Kapseln oder dergl. gezeigt. Die Vibrationszuführung 1 umfasst einen Produktzulauf 3 für die Übergabe der Produkte 2 aus einem Vorratsbehälter 4 auf einen die Produkte 2 zu einem in Förderrichtung etwa 270° entfernten Auslauf 5 fördernden, in Umfangsrichtung durch einen zentralen Antrieb schwingenden Rundvibrationsteller 6. In einer radialen Aufnahme 7 des Rundvibrationstellers 6 ist ein Linearsortierer 8 dem Auslauf 5 stromauf vorgelagert, dem ein Antrieb 9, nämlich in dem Ausführungsbeispiel der Figur 1 ein Piezoantrieb 10, für eine Längsvibration in Richtung einer Sehne des Rundvibrationstellers 6 zugeordnet ist. Die Verwendung eines Magnet-Antriebes ist gleichfalls möglich.

Im Ergebnis müssen die Produkte 2 vor dem Auslauf 5 nicht mehr auf Sortierbahnen unterschiedlicher Kreisbögen umlaufen, sondern werden auf dem letzten Abschnitt ihrer Förderstrecke parallel geführt.

Figur 2 lässt erkennen, dass der Linearsortierer 8 an seinem radial innen liegenden Rand an die Krümmung der Nabe 11 des Rundvibrationstellers 6 angepasst ist, und dass auf dem Linearsortierer 8 parallel zur Förderrichtung verlaufende Bahnen 12 für die Produkte 2 ausgebildet sind. Der Nabe 11 ist stromauf des Linearsortierers 8 ein Leitwulst 13 zugeordnet, der das Einsortieren der Produkte 2 in den Auslauf 5 erleichtert (Figur 2).

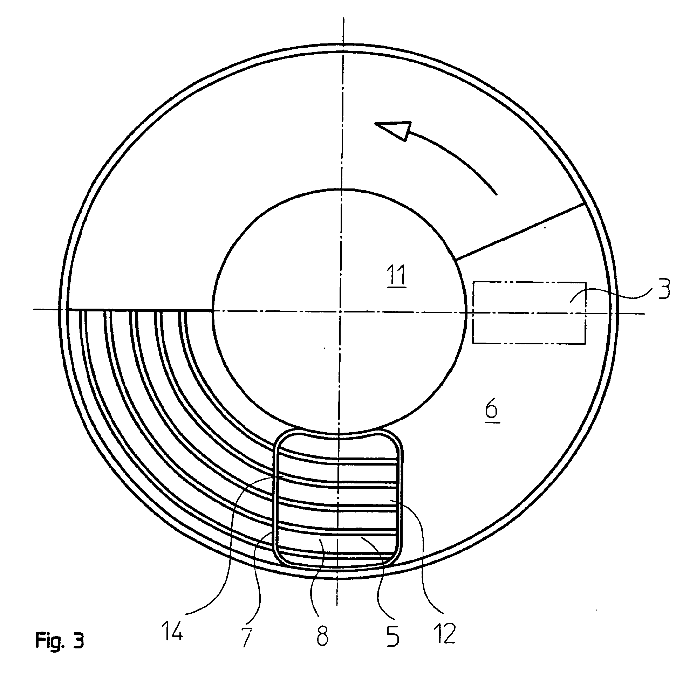

Alternativ kann dies gemäss der Darstellung in Figur 3 erleichtert werden, indem der Einlauf 14 zumindest der radial innen liegenden Bahn 12 radial nach innen gekrümmt ist.

Figur 1 lässt erkennen, dass der Linearsortierer 8 in Förderrichtung geneigt ist, wobei in der Praxis der Neigungswinkel zwischen 2° und 20°, vorzugsweise zwischen 5° und 10° beträgt.

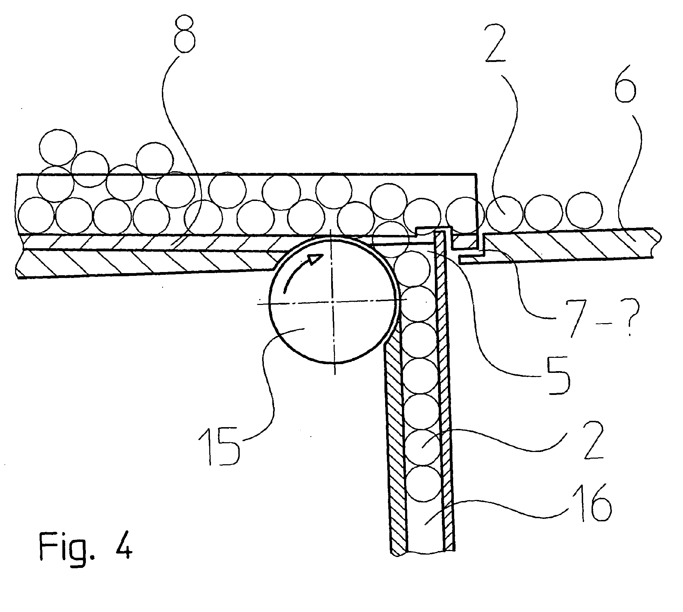

Figur 4 verweist auf ein weiteres Detail, nämlich dass dem Auslauf 5 eine angetriebene Umlenkwalze 15 zugeordnet ist für die Übergabe der Produkte 2 in eine Zuführrinne 16, wobei die Drehrichtung der Förderrichtung entspricht.

## Patentansprüche

1. Vibrationszuführung für die Zuführung von Produkten (2) wie Tabletten, Kapseln oder dergl., mit einem Produktzulauf (3) für die Übergabe der Produkte (2) auf einen die Produkte (2) zu einem Auslauf (5) fördernden, in Umfangsrichtung schwingenden Rundvibrationsteller (6), wobei dem Auslauf (5) stromauf ein Linearsortierer (8) vorgelagert ist, **dadurch gekennzeichnet, dass** dem Linearsortierer (8) ein Antrieb (9) für eine Längsvibration in Richtung einer Sehne des Rundvibrationstellers (6) zugeordnet ist.

2. Vibrationszuführung nach Anspruch 1, **dadurch gekennzeichnet, dass** der Linearsortierer (8) in einer radialen Aufnahme (7) des Rundvibrationstellers (6) angeordnet ist.

3. Vibrationszuführung nach Anspruch 1 oder 2, **dadurch gekennzeichnet, dass** der Antrieb (9) als ein Piezoantrieb (10) oder ein Magnet-Antrieb ausgeführt ist.

4. Vibrationszuführung nach Anspruch 2 oder 3, **dadurch gekennzeichnet, dass** der Linearsortierer (8) an seinem radial innen liegenden Rand an die Krümmung der Nabe (11) des Rundvibrationstellers (6) angepasst ist.

5. Vibrationszuführung nach Anspruch 4, **dadurch gekennzeichnet, dass** auf dem Linearsortierer (8) parallel zur Förderrichtung verlaufende Bahnen (12) für die Produkte (2) ausgebildet sind.

6. Vibrationszuführung nach Anspruch 5, **dadurch gekennzeichnet, dass** der Nabe (11) stromauf des Linearsortierers (8) ein Leitwulst (13) zugeordnet ist.

7. Vibrationszuführung nach Anspruch 5, **dadurch gekennzeichnet, dass** der Einlauf (3) zumindest der radial innen liegenden Bahn (12) radial nach innen gekrümmt ist.

8. Vibrationszuführung nach einem der Ansprüche 1 bis 7, **dadurch gekennzeichnet, dass** der Auslauf (5) in Umfangsrichtung des Rundvibrationstellers (6) mindestens 180°, vorzugsweise 270° von dem Produktzulauf (3) beabstandet ist.

9. Vibrationszuführung nach einem der Ansprüche 1 bis 8, **dadurch gekennzeichnet, dass** der Linearsortierer (8) in Förderrichtung geneigt ist.

10. Vibrationszuführung nach Anspruch 9, **dadurch gekennzeichnet, dass** der Neigungswinkel zwischen 2° und 20°, vorzugsweise zwischen 5° und 10° beträgt.

11. Vibrationszuführung nach einem der Ansprüche 1 bis 10, **dadurch gekennzeichnet, dass** dem Auslauf (5) eine angetriebene Umlenkwalze (15) zugeordnet ist für die Übergabe der Produkte (2) in eine Zuführrinne (16).

## Claims

1. Vibratory supply means for supplying products (2) such as tablets, capsules or the like, comprising a product inlet (3) for transferring the products (2) onto a vibrating circular vibration plate (6) which conveys the products (2) to an outlet (5), a linear sorter (8) being arranged upstream from the outlet (5), **characterised in that** a drive (9) is allocated to the linear sorter (9) to produce longitudinal vibrations in the direction of a chord of the circular vibration plate (6).

2. Vibratory supply means according to claim 1, **characterised in that** the linear sorter (8) is arranged in a radial socket (7) of the circular vibration plate (6).

3. Vibratory supply means according to either claim 1 or claim 2, **characterised in that** the drive (9) is in the form of a piezo drive (10) or a magnet drive.

4. Vibratory supply means according to either claim 2 or claim 3, **characterised in that** the radially inner edge of the linear sorter (8) is adapted to the curvature of the hub (11) of the circular vibration plate (6).

5. Vibratory supply means according to claim 4, **characterised in that** tracks (12) for the products (2) are formed on the linear sorter (8) and extend parallel to the conveying direction.

6. Vibratory supply means according to claim 5, **characterised in that** a convex guide element (13) is allocated to the hub (11) upstream from the linear sorter (8).

7. Vibratory supply means according to claim 5, **characterised in that** the inlet (3) of at least the radially inner track (12) curves inwards radially.

8. Vibratory supply means according to any one of claims 1 to 7, **characterised in that** the outlet (5) is spaced apart from the product inlet (3) by at least 180°, preferably 270°, in the circumferential direction of the circular vibration plate (6).

9. Vibratory supply means according to any one of claims 1 to 8, **characterised in that** the linear sorter (8) is inclined in the conveying direction.

10. Vibratory supply means according to claim 9, **characterised in that** the incline angle is between 2° and 20°, preferably between 5° and 10°.

11. Vibratory supply means according to any one of claims 1 to 10, **characterised in that** a driven deflection roller (15) is allocated to the outlet (5) to convey the products (2) into a supply channel (16).

## Revendications

1. Alimentateur vibrant pour l'alimentation de produits (2) tels que comprimés, gélules ou autres, comprenant une arrivée de produits (3) pour le transfert des produits (2) sur un vibrateur circulaire (6), qui transporte les produits (2) en direction d'une sortie (5) et vibre dans la direction circonférentielle, un trieur linéaire (8) étant monté en amont de la sortie (5), **caractérisé en ce qu'**une commande (9) pour une vibration longitudinale en direction d'une corde du vibrateur circulaire (6) est associée au trieur linéaire (8).

2. Alimentateur vibrant suivant la revendication 1, **caractérisé en ce que** le trieur linéaire (8) est disposé dans un logement radial'(7) du vibrateur circulaire (6).

3. Alimentateur vibrant suivant l'une des revendications 1 et 2, **caractérisé en ce que** la commande (9) est réalisée sous forme d'une commande piézoélectrique (10) ou d'une commande magnétique.

4. Alimentateur vibrant suivant l'une des revendications 2 et 3, **caractérisé en ce que** le trieur linéaire (8) est adapté sur son bord radial intérieur au cintrage du moyeu (11) du vibrateur circulaire (6).

5. Alimentateur vibrant suivant la revendication 4, **caractérisé en ce que** des bandes (12), s'étendant parallèlement à la direction de transport, sont réalisées sur le trieur linéaire (8) pour les produits (2).

6. Alimentateur vibrant suivant la revendication 5, **caractérisé en ce qu'**un bourrelet de guidage (13) est associé au moyeu (11) en amont du trieur linéaire (8).

7. Alimentateur vibrant suivant la revendication 5, **caractérisé en ce que** l'entrée (3) d'au moins la bande radiale intérieure (12) est cintrée radialement vers l'intérieur.

8. Alimentateur vibrant suivant l'une des revendications 1 à 7, **caractérisé en ce que** la sortie (5) est distante de l'arrivée de produits (3), dans la direction circonférentielle du vibrateur circulaire (6), d'au moins 180°, de préférence de 270°.

9. Alimentateur vibrant suivant l'une des revendications 1 à 8, **caractérisé en ce que** le trieur linéaire (8) est incliné dans la direction de transport.

10. Alimentateur vibrant suivant la revendication 9, **caractérisé en ce que** l'angle d'inclinaison est compris entre 2° et 20°, de préférence entre 5° et 10°.

11. Alimentateur vibrant suivant l'une des revendications 1 à 10, **caractérisé en ce qu'**un cylindre de renvoi (15) entraîné est associé à la sortie (5) pour le transfert des produits (2) dans une goulotte d'alimentation (16).
